# EUROPEAN PATENT APPLICATION

(11) **EP 4 184 962 A1**
(43) Date of publication of application: **24.05.2023**
(21) Application number: 21209898.2
(22) Date of filing: 23.11.2021
(51) Int. Cl.: H04W 4/14, H04W 4/50, H04W 4/60, H04W 8/04, H04W 60/00, H04W 88/18

(54) **INFORMATION RETRIEVAL FOR SMS**

(71) Applicant: Nokia Solutions and Networks Oy, 02610 Espoo (FI)
(72) Inventor: DHARMADHIKARI, Neeraj S, 416008 Kolhapur (IN)
(74) Representative: Nokia EPO representatives

(57) **Abstract**

Method comprising:
monitoring if an short message service reachability information is received informing that a terminal becomes reachable for short message service;
obtaining at least one of an address of a short message service function responsible for the terminal and short message service subscription information of the terminal if the short message service reachability information is received;
informing a home subscriber server of the terminal on the at least one of the address of the short message service function and the short message service subscription information.

## Description

### Field of the invention

The present disclosure relates to SMS, in particular to information retrieval (such as location information retrieval and/or subscription information retrieval) for SMS.

Abbreviations
- 3GPP: 3^{rd} Generation Partnership Project
- 4G / 5G /6G: 4^{th} / 5^{th} /6^{th} Generation
- 5GC: 5G Core
- 5GS: 5G System
- AMF: Access and Mobility management Function
- CLA: Cancel Location Answer
- CLR: Cancel Location Request
- DM: Data Management
- EE: Event Exposure
- EPC: Evolved Packet Core
- EPS: Evolved Packet System
- GPRS: General Packet Radio Service
- GW: Gateway
- GW-SMSC: GW SMSC
- HLR: Home Location Register
- HSS: Home Subscriber Server
- IMSI: International Mobile Subscription Information
- MAP: Mobile Application Part
- MME: Mobility Management Entity
- MT: Mobile Terminated
- MWD: Messages-Waiting-Data
- SC: Service Centre
- SGSN: Serving GPRS Support Node
- SM: Short Message
- SMS: Short Message Service
- SMSC: Short Message Service Center
- SMSF: Short Message Service Function
- SN: Serving Network
- SRI: Service Request Indicator
- SRR: Send-Routing-Info-for-SM-Request
- SUPI: Subscription Permanent Identifier
- TR: Technical report
- TS: Technical specification
- UDM: Unified Data Management
- UDR: Unified Data Repository
- UE: User Equipment
- UECM: UE Context Management
- ULA: Update Location Answer
- ULR: Update Location Request
- VLR: Visitor Location Register

### Background

3GPP TS 23.632 defines the data exchange and interworking between 5G-UDM and 3GPP HSS (2G/3G/4G, in 2G named HLR). The interworking and data exchange between UDM and HSS is deemed needed as the storage for the 5G and pre-5G subscription and some dynamic information of 5G is managed and stored independently from the storage for the 2G/3G/4G subscription and some dynamic information of 2G/3G/4G (UDM → 5G-UDR, HSS→ EPS-UDR).

Short Messaging is an important service. The SMs are served by a SMSC, e.g. (but not limiting) by a GW-SMSC at the edge of a network receiving SMS from another network than the home network. For the delivery of SM, SMSC needs to know the domain on which the subscriber is currently available. When SMSC queries the HSS(HLR) over MAP-C/S6c SRI_SM/SRR to get the registered domain address, HSS(HLR) can provide all the three potential domain addresses that may be available with HSS. The three potential domain addresses are an address of a VLR (2G) to which the UE is attached, an address of an SGSN/MME (3G and 4G) to which the UE is attached, and an address of a SMSF responsible for the UE if the UE is attached to the 5GC or the delivery of SMS could happen over IMS network, via IP-SM-GW. That is, if HSS needs to know the availability/reachability of the UE in 5G SMSF (which may be combined with AMF to AMF/SMSF), HSS needs to fetch the SMSF address from UDM, and then HSS sends it to SMSC.

Hereinafter, the current message flows related to SMS delivery are explained based on 3GPP TS 23.632, v16.5.0.

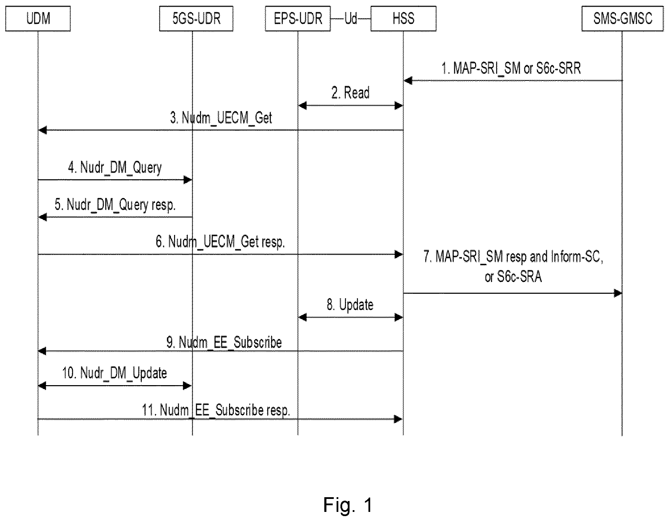

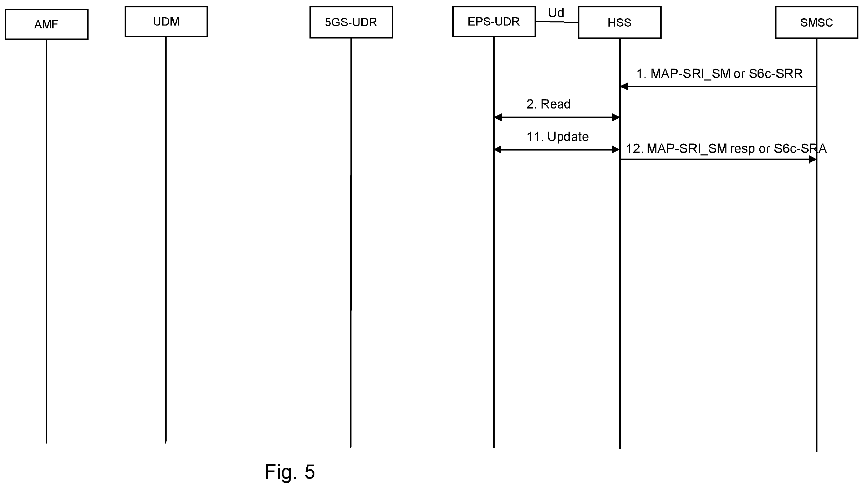

Fig. 1 shows 3GPP TS 23.632, Figure 5.5.2-1: SMS Routing Info Retrieval. Fig. 1 shows the interaction when the SMS-GMSC retrieves routing information from the HSS for MT-SMS delivery. The messages are substantially as follows:
1. The HSS receives a request for routing information from the SMS-GMSC via MAP or S6c.
2. The HSS queries the EPS-UDR via Ud to read the registered MME/MSC, the registered SGSN, and the UE-not-reachable flags for SMS in MME/MSC, SGSN and UDM.
3. If the UE-not-reachable flag for SMS in UDM is not set and unless the user is known not to be registered in 5GC, the HSS retrieves the registered SMSF addresses (if any) from the UDM.
4-5. The UDM retrieves the requested information from the 5GS-UDR.
6. The UDM forwards the retrieved addresses to the HSS if any.
7. The HSS returns the relevant MT-SMS target node addresses registered in HSS and/or UDM to the SMS-GMSC and the procedure is terminated.
   Otherwise, if there is no MT-SMS target node address registered in HSS nor in UDM, a negative response (Absent Subscriber SM) is sent to the SMS-GMSC and the procedure continues with steps 8 to 11.
8. The HSS includes the SMSC address to the Message Waiting Data (MWD) stored in the EPS-UDR and informs the SMSC accordingly.
9. The HSS subscribes in UDM to be notified when the UE becomes reachable for SMS (i.e. when the UE gets in radio contact with the AMF while an SMSF actually is registered, or when an SMSF gets registered) by using the Nudm_EE_Subscribe service operation (SUPI, UE Reachability for SMS event).
10. The UDM stores the EE-subscription (Reachability for SMS) in the 5G-UDR.
11. The UDM acknowledges the subscription to the HSS.

To summarize, if the UE has subscription for 5G access but is unavailable on the 5G domain (i.e. AMF/SMSF registration is unavailable), and if none of the domain registration infos is unavailable, HSS stores the message waiting data indication (message 8). HSS also subscribes to UDM to notify when the subscriber becomes available.

By Message-3, HSS queries UDM as part of every query for SMS delivery address from SMSC. By Message-9, HSS subscribes to UDM in case UE is unavailable in any domain.

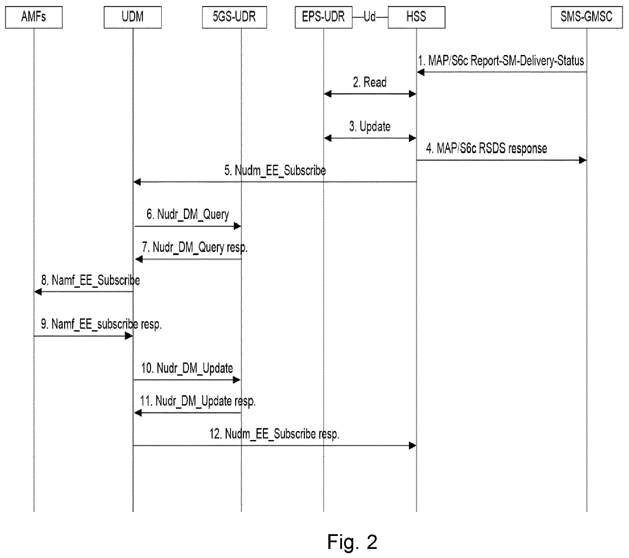

Fig. 2 shows 3GPP TS 23.632, Figure 5.5.3-1: MT-SMS Delivery Failure. Fig. 2 shows the interaction when the SMS-GMSC sends Report-SM-Delivery-Status to the HSS. The messages are substantially as follows:
1. The HSS receives a Report-SM-Delivery-Status from the SMS-GMSC indicating the MT-SMS target nodes at which MT-SMS delivery was unsuccessful.
2-3. The HSS reads and updates the Message Waiting Data stored in the EPS-UDR.
4. The HSS acknowledges the receipt of the delivery status to the SMS-GMSC.
5. If during step 3 the UE-not-reachable flag for UDM was modified from false to true, the HSS subscribes to notification on UE-Reachability for SMS at the UDM, using the Nudm_EE_Subscribe service operation.
6-7. The UDM checks that the UE is registered in an AMF and SMSF. The UDM then queries the 5GS-UDR to see whether the UE-Reachability event has already been subscribed at the registered AMF(s) (i.e. whether URRP-AMF flag is set).
8-9. If not already subscribed, the UDM subscribes to UE-Reachability notification at the AMF(s) using the Namf_EE service.
10-11. The UDM stores the received EE-Subscription in the 5GS-UDR and if steps 8-9 were performed, the UDM sets the relevant URRP-AMF flags in the 5GS-UDR.
12. The UDM acknowledges the subscription to the HSS.

As shown in Fig. 2, SMSC indicates to HSS the SMS delivery status. If SMSC attempts SM delivery but fails, HSS initiates subscription towards UDM for UE Reachability for SMS event. The subscription is stored on the UDM to notify when the subscriber is available back on the network.

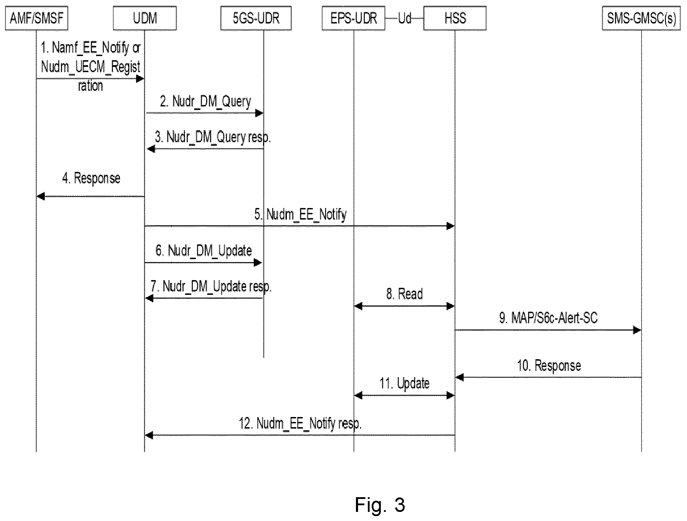

Fig. 3 shows 3GPP TS 23.632, Figure 5.5.4-1: SMS Alerting. Fig. 3 depicts event notification on subscriber availability in 5G. Once the UE is available in AMF, or SMSF registration is made in the UDM, UDM looks for pending event subscriptions. It notifies the entities subscribed for the event. The messages are substantially as follows:
1. The UDM receives a Notification from the AMF or an SMSF Registration.
2-3. The UDM queries the 5GS-UDR to see whether any NF (e.g. the HSS) has subscribed to notifications on UE-reachability for SMS events.
4. The UDM acknowledges the message received in step 1.
5. If the HSS has subscribed to UE reachability for SMS notification, the UDM notifies the HSS.
6-7. The UDM updates (clears) the relevant reachability flag and, if the HSS has been notified in step 5, also deletes the (one-time) EE-subscriptions of UE reachability for SMS in the 5GS-UDR.
   Steps 8 to 11 are skipped if the HSS has not been notified in step 5.
8. The HSS reads Message Waiting Data from the EPS-UDR.
9-10. The HSS sends Alert-SC to all SMS-GMSCs stored in the MWD.
11. The HSS removes the SMS-GMSCs from the MWD stored in the EPS-UDR and clears the relevant UE-not-reachable flags from the EPS-UDR.
12. The HSS acknowledges receipt of the Notification to the UDM.

That is, on receiving the notification, HSS being aware of the message waiting data, triggers the Alert-SC to SMSC. SMSC retries Routing Info Retrieval from HSS to retrieve the available domain address. (similar call-flow as depicted in Fig. 1).

### Summary

### It is an object of the present invention to improve the prior art.

According to a first aspect of the invention, there is provided an apparatus comprising:
one or more processors, and memory storing instructions that, when executed by the one or more processors, cause the apparatus to perform:
   monitoring if an short message service reachability information is received informing that a terminal becomes reachable for short message service;
   obtaining at least one of an address of a short message service function responsible for the terminal and short message service subscription information of the terminal if the short message service reachability information is received;
   informing a home subscriber server of the terminal on the at least one of the address of the short message service function and the short message service subscription information.

According to a second aspect of the invention, there is provided an apparatus comprising:
one or more processors, and memory storing instructions that, when executed by the one or more processors, cause the apparatus to perform:
   receiving a short message service reachability information informing that a terminal becomes reachable for short message service along with at least one of an address of a short message service function responsible for the terminal and short message service subscription information of the terminal;
   storing the at least one of the address of the short message service function and the short message service subscription information in a register;
   monitoring if a request for the address of the short message service function responsible for the terminal is received; and at least the respective one of:
      retrieving the short message service subscription information from the register if the request is received, checking, based on the retrieved short message service subscription information, whether the retrieved short message service subscription information allows the terminal to receive a short message, and inhibiting providing of any address in response to the request if the short message service subscription information does not allow the terminal to receive the short message; and
      retrieving the address of the short message service function from the register if the request is received, and providing the retrieved address of the short message service function in response to the request.

According to a third aspect of the invention, there is provided a method comprising:
monitoring if an short message service reachability information is received informing that a terminal becomes reachable for short message service;
obtaining at least one of an address of a short message service function responsible for the terminal and short message service subscription information of the terminal if the short message service reachability information is received;
informing a home subscriber server of the terminal on the at least one of the address of the short message service function and the short message service subscription information.

According to a fourth aspect of the invention, there is provided a method comprising:
receiving a short message service reachability information informing that a terminal becomes reachable for short message service along with at least one of an address of a short message service function responsible for the terminal and short message service subscription information of the terminal;
storing the at least one of the address of the short message service function and the short message service subscription information in a register;
monitoring if a request for the address of the short message service function responsible for the terminal is received; and at least the respective one of:
   retrieving the short message service subscription information from the register if the request is received, checking, based on the retrieved short message service subscription information, whether the retrieved short message service subscription information allows the terminal to receive a short message, and inhibiting providing of any address in response to the request if the short message service subscription information does not allow the terminal to receive the short message; and
   retrieving the address of the short message service function from the register if the request is received, and providing the retrieved address of the short message service function in response to the request.

Each of the methods of the third and fourth aspects may be a method of information retrieval for SMS.

According to a fifth aspect of the invention, there is provided a computer program product comprising a set of instructions which, when executed on an apparatus, is configured to cause the apparatus to carry out the method according to any of the third and fourth aspects. The computer program product may be embodied as a computer-readable medium or directly loadable into a computer.

According to some embodiments of the invention, at least one of the following advantages may be achieved:
- signaling effort may be reduced
- SMs may be delivered faster.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein:
Fig. 1 shows 3GPP TS 23.632, Figure 5.5.2-1: SMS Routing Info Retrieval;
Fig. 2 shows 3GPP TS 23.632, Figure 5.5.3-1: MT-SMS Delivery Failure;
Fig. 3 shows 3GPP TS 23.632, Figure 5.5.4-1: SMS Alerting;
Fig. 4 shows a message flow according to some example embodiments of the invention;
Fig. 5 shows a message flow according to some example embodiments of the invention;
Fig. 6 shows a message flow according to some example embodiments of the invention;
Fig. 7 shows a message flow according to some example embodiments of the invention;
Fig. 8 shows an apparatus according to an example embodiment of the invention;
Fig. 9 shows a method according to an example embodiment of the invention;
Fig. 10 shows an apparatus according to an example embodiment of the invention;
Fig. 11 shows a method according to an example embodiment of the invention; and
Fig. 12 shows an apparatus according to an example embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

In a service-based architecture, a consumer subscribes to an event on the producer with an intent to act upon the notification that shall be received. The consumer may need additional information from the producer. According to some example embodiments, the notifications comprise the additional information. Such an enhancement removes the need for the consumer to query the producer again upon receiving the notification of occurrence of an event.

In detail, during Location Info Retrieval query from SMSC to HSS, the subscriber might be available in 5G domain. Conventionally, HSS queries UDM to know the 5G domains delivery address (i.e. the SMSF address) (messages 3 to 6 of Fig. 1). According to some example embodiments of the invention, some response (message 11 of Fig. 1) and/or event notifications from UDM to HSS (message 5 of Fig. 3) may comprise additionally the address of the relevant SMSF. In addition or alternatively, these requests or event notifications may comprise SMS subscription information of the UE. Thus, signaling of messages 3 to 6 of Fig. 1 may be omitted. The SMS subscription info may include for example at least one of: mtSmsSubscribed (i.e., the UE is subscribed for SMS), mtSmsBarringAII (i.e. all SMS to the terminal are barred), and mtSmsBarringRoaming (i.e. information if SMS are barred while the terminal is roaming).

In some example embodiments, the HSS may explicitly inform the UDM in his subscription for event notifications (message 9 of Fig. 1 and message 5 of Fig. 2) that the UDM shall additionally include the SMSF address in the notification. In some example embodiments, the subscription may imply that the UDM shall additionally include the SMSF address in the notification, without any explicit indication.

Between UDM and HSS, there are two interworking message flows (Figs. 1 and 3) during which, according to some example embodiments of the invention, additional subscription/registration information (e.g. SMSF address) may be provided towards HSS. Thus, at least one of the current message flows is optimized to reduce signalling and deliver SMs faster.

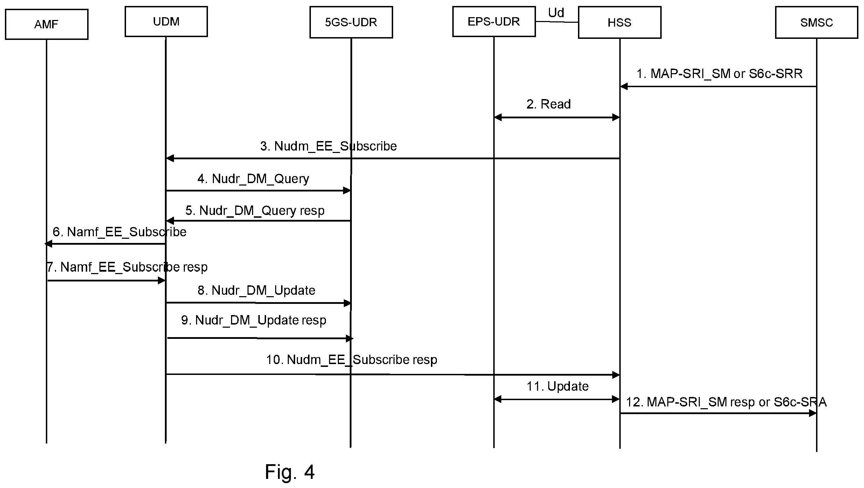

The following message flows of Figs. 4 to 7 are explained with a relevant SMSF address as the additional information. However, instead of or in addition to the relevant SMSF address, the additional information may be SMS subscription information.

Figs. 4 and 5 shows message flows according to some example embodiments of the invention. This message flow is an enhancement of the message flow of Fig. 1. Fig. 5 is an optimized version of the message flow of Fig. 4 for a case that the 5G domain SMSF address is available in EPS-UDR at message 2 of Fig. 4. In this case, messages 3 to 10 of Fig. 4 may be skipped.

The messages of Fig. 4 are substantially as follows:
1. SMSC queries HSS to fetch the SMS delivery address (SMSF address if the UE is attached to 5GC).
2. HSS looks up EPS-UDR to get subscription information and the SMS delivery address, i.e. VLR address if the UE is attached to 2G core; SGSN address if the UE is attached to 3G or 4G core, and SMSF address if the UE is attached to 5GC. The HSS also fetches if there is an existing subscription towards UDM to receive UE_REACHABILITY_FOR SMS.
3. At this point, the 5G domain SMSF address may be available in EPS-UDR. In that case the call-flow jumps to message 12 (skip messages 3 to 10 of Fig. 4, the Fig. 5 depicts such a case). If SMSF address is not available and there is no previous subscription for UE_REACHABILITY_FOR_SMS, then HSS subscribes towards UDM to receive the UE_REACHABILITY_FOR_SMS, . The subscription request may also include an explicit indication that information about SMSF address and/or SMS subscription is requested. Alternatively, the message 3 may be considered as implicitly indicating that information about SMSF address and/or SMS subscription is requested.
4. UDM queries 5G-UDR to fetch UE reachability information and reachability info for SMS including SMSF address and/or SMS subscription.
5. Response to message 4 with requested data.
6. If, according to the information available at UDM, the UE is not reachable in AMF, the UDM initiates the Namf_EE-Subscribe request to AMF. However, if UE is reachable in AMF, messages 6 to 9 may be omitted.
7. Response to message 6.
8. UDM updates the subscription and correlation ID in the 5G-UDR.
9. Response to message 8
10. This is response to message 3, it includes the UE_REACHABILITY_FOR SMS: SMSF address and/or SMS subscription info if available and event correlation ID.
   If the SMSF address is not available or UE is not reachable in the AMF, it includes event correlation ID with no additional information (SMSF address, SMS subscription, etc.).
11. If the message 10 includes the SMSF address and/or SMS subscription info, it is stored in the EPS-UDR.
   If the message 10 does not include the SMSF address and/or SMS subscription information but only event correlation ID, then it is stored in the EPS-UDR.
12. HSS responds to SMSC with the available address if any of the domain address is allowed for delivery. In some example embodiments, HSS may perform a validity check before it provides the SMSF address and/or SMS subscription information to SMSC. If the result of the validity check fails, HSS may reply to the query of message 1 from the SMSC with subscription invalid, or SMS barred or absent subscriber errors. If the subscriber is not available in any of the domains, Absent subscriber is indicated as response to the query of message 1 from the SMSC.

Thus, HSS knows the address of the relevant SMSF for the UE. Accordingly, the message flow of Fig. 1 may be modified as shown in Fig. 4 by omitting messages 3 to 6 of Fig. 1.

The subscribe request from the HSS to UDM of message 3 of Fig. 4 may comprise an indication that immediate report is requested. If the subscribe request comprises the indication that immediate report is requested and the SMS address and/or SMS subscription information is already available at UDM, UDM may provide the SMS address and/or subscription information in the response to the subscribe request. Correspondingly as discussed for the notification, whether or not the response to the subscribe request comprises the SMS address and/or subscription information may depend on whether or not the subscribe request comprises an explicit indication that information about SMSF address and/or SMS subscription is requested.

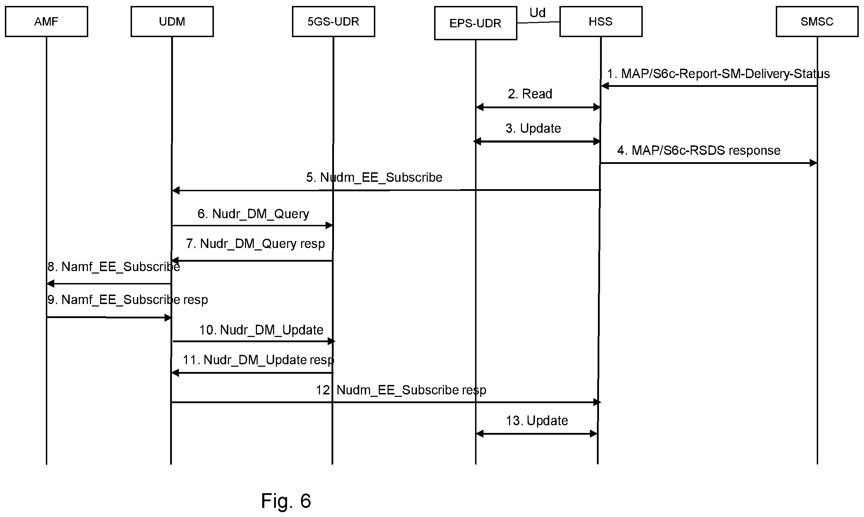

Fig. 6 depicts a message flow in the case of the SMS delivery attempt failure according to some example embodiments of the invention (corresponding to the message flow of Fig. 2). As shown in Fig. 6, when a SMSC indicates to HSS that the SMS delivery attempt failed, (the same message could be used to indicate success of SMS delivery, in that case no further processing needed), the HSS stores corresponding MWD data into EPS-UDR. HSS also checks if there is a subscription towards UDM to notify UE_REACHABILITY_FOR_SMS. If such subscription does not exists, HSS creates a new one.

The messages of Fig. 6 are substantially as follows:
1. SMSC indicates to HSS via Report SM Delivery Status message that SMS delivery attempt failed.
2. HSS fetches, from EPS-UDR, the subscriber details and UE_REACHABILITY_FOR_SMS event details (correlation id) if present.
3. HSS updates the MWD data with the SMSC address.
4. HSS responds to SMSC.

If there is no previous EE subscription towards UDM for UE_REACHABILITY_FOR_SMS, then messages/actions 5 to 12 are executed. The details for these messages/actions are similar to messages/actions 3 to 10 of Fig. 4. In detail:
5. If SMSF address is not available and there is no previous subscription for UE_REACHABILITY_FOR_SMS, then HSS subscribes towards UDM to receive the UE_REACHABILITY_FOR_SMS. The subscription request may also include an explicit indication that information about SMSF address and/or SMS subscription is requested. Alternatively, the message 5 may be considered as implicitly indicating that information about SMSF address and/or SMS subscription is requested.
6. UDM queries 5G-UDR to fetch UE reachability information and reachability info for SMS including SMSF address and/or SMS subscription.
7. Response to message 6 with requested data.
8. If, according to the information available at UDM, the UE is not reachable in AMF, the UDM initiates the Namf_EE-Subscribe request to AMF. However, if UE is reachable in AMF, messages 8 to 11 may be omitted.
9. Response to message 8.
10. UDM updates the subscription and correlation ID in the 5G-UDR.
11. Response to message 10
12. This is response to message 5, it includes the UE_REACHABILITY_FOR SMS: SMSF address and/or SMS subscription info if available and event correlation ID.
   If the SMSF address is not available or UE is not reachable in the AMF, it includes event correlation ID with no additional information (SMSF address, SMS subscription, etc.).
13. If the message 12 includes the SMSF address and/or SMS subscription info, it is stored in the EPS-UDR.
   If the message 12 does not include the SMSF address and/or SMS subscription information but only event correlation ID, then it is stored in the EPS-UDR.

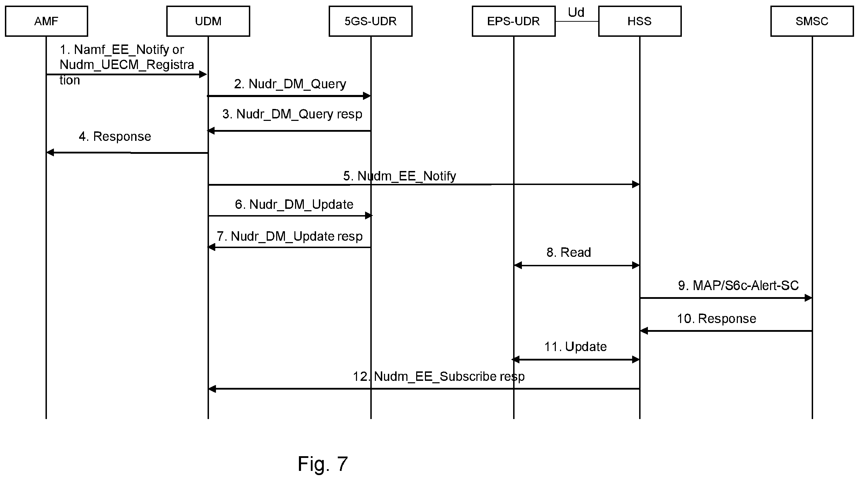

Fig. 7 shows another message flow according to some example embodiments of the invention. This message flow is an enhancement of the message flow of Fig. 3. Namely, once UE becomes available in 5G AMF, or SMSF registration is received on UDM, UDM notifies HSS because of pending subscription. I.e., by message 3 of Fig. 4 and message 5 of Fig. 6, HSS does not request a subscription for a single event but requests a permanent subscription at UDM. The notification includes the SMSF address and/or SMS subscription information.

The messages of Fig. 7 are substantially as follows:
1. UDM receives AMFnotification on UE activity or a fresh registration from SMSF.
2. UDM queries 5G-UDR to fetch the subscription event on reachability for SMS. UDM fetches the SMSF address from the 5G-UDR.
3. Response.
4. UDM responds to the notification from AMF/SMSF.
5. For the validly subscribed event on UDM, UDM triggers Nudm_EE_Notify towards HSS. The SMSF address fetched from 5G-UDR is included in the notification in case the subscribed event is reachability for SMS.
6. UDM deletes the reachability flags.
7. Response to message 6.
8. HSS reads message waiting data from the EPS-UDR.
9. HSS triggers all SMSCs which were present in the message waiting data and informs them on the SMSF address.
10. HSS receives response for Alert-SC from SMSCs
11. On successful response for Alert SC, HSS clears the SMSC address from the MWD list in the EPS-UDR. HSS updates the received SMSF address in the Nudm_EE_Notify in the EPS-UDR.
12. HSS acknowledges receipt of notification to the UDM.

Some example embodiments of the invention employ the message flows of Figs. 4 and 5 but not that of Fig. 6. Some example embodiments of the invention employ the message flow of Fig. 6 but not those of Figs. 4 and 5. Some example embodiments of the invention employ the message flows of Figs. 4 to 6. In addition, some example embodiments of the invention may employ the message flow of Fig. 7.

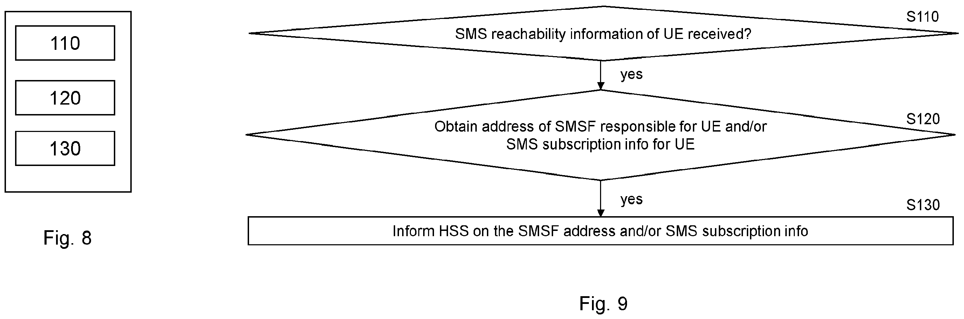

Fig. 8 shows an apparatus according to an example embodiment of the invention. The apparatus may be a UDM or an element thereof. Fig. 9 shows a method according to an example embodiment of the invention. The apparatus according to Fig. 8 may perform the method of Fig. 9 but is not limited to this method. The method of Fig. 9 may be performed by the apparatus of Fig. 8 but is not limited to being performed by this apparatus.

The apparatus comprises means for monitoring 110, means for obtaining 120, and means for informing 130. The means for monitoring 110, means for obtaining 120, and means for informing 130 may be a monitoring means, obtaining means, and informing means, respectively. The means for monitoring 110, means for obtaining 120, and means for informing 130 may be a monitor, obtainer, and informer, respectively. The means for monitoring 110, means for obtaining 120, and means for informing 130 may be a monitoring processor, obtaining processor, and informing processor, respectively.

The means for monitoring 110 monitors if an SMS reachability information is received (S110). The SMS reachability information informs that a terminal becomes reachable for SMS. If the SMS reachability information is received (S110 = yes), the means for obtaining 120 obtains at least one of an address of a SMSF responsible for the terminal and SMS subscription information of the terminal (S120). The means for informing 130 informs a HSS of the terminal on the at least one of the address of the SMSF and the SMS subscription information (S130).

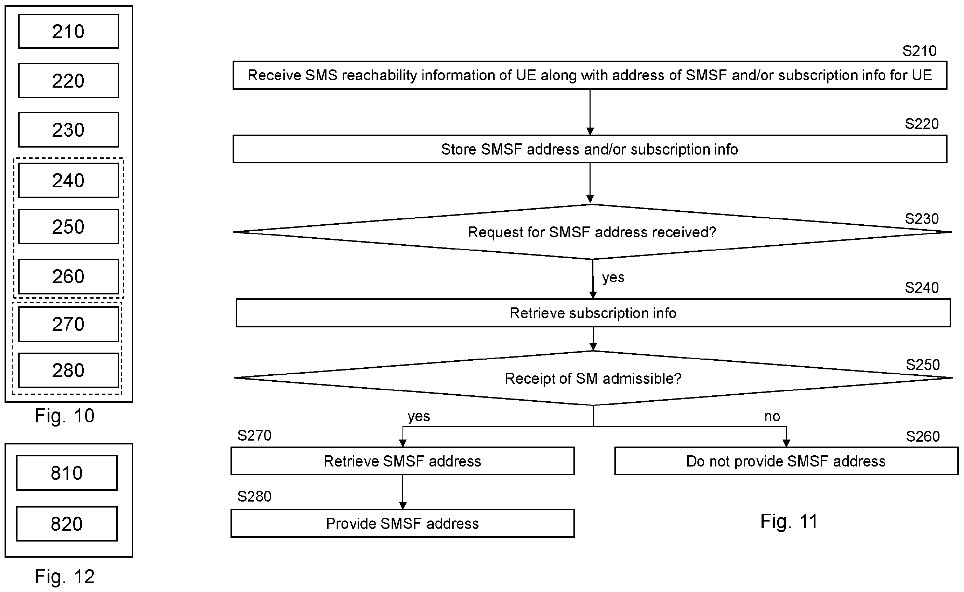

Fig. 10 shows an apparatus according to an example embodiment of the invention. The apparatus may be a HSS or an element thereof. Fig. 11 shows a method according to an example embodiment of the invention. The apparatus according to Fig. 10 may perform the method of Fig. 11 but is not limited to this method. The method of Fig. 11 may be performed by the apparatus of Fig. 10 but is not limited to being performed by this apparatus.

The apparatus comprises means for receiving 210, means for storing 220, and means for monitoring 230. Furthermore, the apparatus comprises at least one of first means for retrieving 240 together with means for checking 250 and means for inhibiting 260, and second means for retrieving 270 together with means for providing 280. The means for receiving 210, means for storing 220, means for monitoring 230, first means for retrieving 240, means for checking 250, inhibiting means 260, second means for retrieving 270, and means for providing 280 may be a receiving means, storing means, monitoring means, first retrieving means, checking means, inhibiting means, second retrieving means, and providing means, respectively. The means for receiving 210, means for storing 220, means for monitoring 230, first means for retrieving 240, means for checking 250, inhibiting means 260, second means for retrieving 270, and means for providing 280 may be a receiver, storage device, monitor, first retriever, checker, inhibitor, second retriever, and provider, respectively. The means for receiving 210, means for storing 220, means for monitoring 230, first means for retrieving 240, means for checking 250, inhibiting means 260, second means for retrieving 270, and means for providing 280 may be a receiving processor, storing processor, monitoring processor, first retrieving processor, checking processor, inhibiting processor, second retrieving processor, and providing processor, respectively. Fig. 10 shows an apparatus comprising both the first retrieving means 240 together with the checking means 250 and the inhibiting means 260 and the second retrieving means 270 together with the providing means 280, and Fig. 11 shows a corresponding method.

The means for receiving 210 receives a SMS reachability information (S210). The SMS reachability information informs that a terminal becomes reachable for SMS. Furthermore, the SMS reachability information comprises at least one of an address of a SMSF responsible for the terminal and SMS subscription information for the terminal. In particular, the SMS reachability information may comprise the address of the SMSF if the apparatus comprises the second means for retrieving 270 together with the means for providing 280. In particular, the SMS reachability information may comprise the SMS subscription information if the apparatus comprises the first means for retrieving 240 together with the means for checking 250 and the means for inhibiting 260. The means for storing 220 stores the at least one of the address of the SMSF and the SMS subscription information in a register (S220), such as EPS-UDR. Then, the means for monitoring 230 monitors if a request for the address of the SMSF responsible for the terminal is received (S230).

If the request is received (S230 = yes) and the apparatus comprises the first retrieving means 240 together with the checking means 250 and the inhibiting means 260, the first retrieving means 240 retrieves the SMS subscription information from the register (S240), provided that the SMS reachability information comprises the SMS subscription information. The means for checking 250 checks whether the retrieved SMS subscription information allows the terminal to receive a SM (S250). If the retrieved SMS subscription information does not allow the terminal to receive a SM (S250 = no), the means for inhibiting 260 inhibits that an address (i.e. an address of a SMSF) is provided in response to the request of S230 (S260). I.e., in this case, the response to the request of S230 is negative.

If the apparatus does not comprise the first retrieving means 240 together with the checking means 250 and the inhibiting means 260, or if the apparatus comprises the first retrieving means 240 together with the checking means 250 and the inhibiting means 260 and the means for checking 250 checks (confirms) that the retrieved SMS subscription information allows the terminal to receive a SM (S250 = yes), or if the SMS reachability information does not comprise the SMS subscription information, the means for retrieving 240 retrieves, if the request is received (S230 = yes), the address of the SMSF from the register (S240), provided that the SMS reachability information comprises the address of the SMSF. Then, the means for providing 250 provides the retrieved address of the SMSF in response to the received request (S250). That is, if the apparatus does not does not comprise the first retrieving means 240 together with the checking means 250 and the inhibiting means 260, it is assumed that the hypothetical checking by a hypothetical checking means 250 is affirmative.

In some example embodiments, the SMS subscription information and the SMSF address may be retrieved jointly, i.e. the first and second means for retrieving 240 and 270 are the same means for retrieving.

Fig. 12 shows an apparatus according to an embodiment of the invention. The apparatus comprises at least one processor 810, at least one memory 820 including computer program code, and the at least one processor 810, with the at least one memory 820 and the computer program code, being arranged to cause the apparatus to at least perform at least the method according to at least one of Figs. 9 and 11 and related description.

Some example embodiments are explained with respect to a 5G network on one side and a 2G, 3G, or 4G network on the other side. However, the invention is not limited to 5G on one side. It may be used in forthcoming network generations of 3GPP networks such as 6G, or 7G, etc., too.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments of the present invention provide, for example, a data management (such as a UDM) or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example, a subscription register (such as a HSS) or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments of the present invention. However, it should be noted that the description of the preferred example embodiments is given by way of example only and that various modifications may be made without departing from the scope of the invention as defined by the appended claims.

## Claims

1. Apparatus comprising:
one or more processors, and
memory storing instructions that, when executed by the one or more processors, cause the apparatus to perform:
monitoring if an short message service reachability information is received informing that a terminal becomes reachable for short message service;
obtaining at least one of an address of a short message service function responsible for the terminal and short message service subscription information of the terminal if the short message service reachability information is received;
informing a home subscriber server of the terminal on the at least one of the address of the short message service function and the short message service subscription information.

2. The apparatus according to claim 1, wherein the instructions, when executed by the one or more processors, further cause the apparatus to perform:
checking if the home subscriber server has subscribed for being informed if the terminal becomes reachable for short message service;
notifying the home subscriber server that the terminal becomes reachable for short message service if the short message service reachability information is received and the home subscriber server has subscribed; and wherein
the informing of the home subscriber server comprises including the at least one of the address of the short message service function and the short message service subscription information in the notification.

3. The apparatus according to claim 2, wherein the instructions, when executed by the one or more processors, further cause the apparatus to perform:
supervising whether a subscription request is received from the home subscriber server, wherein the subscription request requests to subscribe for receiving the notification immediately if the terminal becomes reachable for short message service;
checking whether the terminal is reachable for short message service when the subscription request is received from the home subscriber server; wherein
the informing of the home subscriber server comprises including the at least one of the address of the short message service function and the short message service subscription information in a response to the subscription request if the terminal is reachable for short message service when the subscription request is received from the home subscriber server.

4. The apparatus according to claim 3, wherein the instructions, when executed by the one or more processors, further cause the apparatus to perform:
checking if the home subscriber server has subscribed for receiving the notification immediately if the terminal becomes reachable for short message service; and wherein
the home subscriber server is immediately notified if the registration information is received and the home subscriber server has subscribed for receiving the notification immediately.

5. The apparatus according to any of claims 2 to 4, wherein the instructions, when executed by the one or more processors, further cause the apparatus to perform:
checking if the request to subscribe from the home subscriber server comprises an indication to include the at least one of the address of the short message service function and the short message service subscription information in the notification;
inhibiting the including the at least one of the address of the short message service function and the short message service subscription information in the notification if the request to subscribe does not include the indication.

6. The apparatus according to claim 5 dependent directly or indirectly on claim 3, wherein the instructions, when executed by the one or more processors, further cause the apparatus to perform:
inhibiting the including the at least one of the address of the short message service function and the short message service subscription information in the response to the subscription request if the request to subscribe does not include the indication.

7. The apparatus according to any of claims 2 to 6, wherein the home subscriber server has subscribed for being informed every time if the reachability for short message service of the terminal is modified, wherein the reachability for short message service of the terminal is modified if at least one of the terminal becomes reachable in the network, and the address of the short message service function responsible for the terminal is modified.

8. The apparatus according to any of claims 1 to 6, wherein the instructions, when executed by the one or more processors, cause the apparatus to perform the informing the home subscriber server on the at least one of the address of the short message service function and the short message service subscription information without receiving any explicit indication requesting to provide the at least one of the address of the short message service function and the short message service subscription information.

9. The apparatus according to any of claims 1 to 8, wherein the short message service reachability information comprises an information that the terminal becomes reachable in a network.

10. The apparatus according to claim 9, wherein the network is a 5G network.

11. The apparatus according to any of claims 1 to 10, wherein
the short message service reachability information comprises an information that the terminal is reachable for short message service due to a new registration of the short message service function responsible for the terminal.

12. Apparatus comprising:
one or more processors, and
memory storing instructions that, when executed by the one or more processors, cause the apparatus to perform:
receiving a short message service reachability information informing that a terminal becomes reachable for short message service along with at least one of an address of a short message service function responsible for the terminal and short message service subscription information of the terminal;
storing the at least one of the address of the short message service function and the short message service subscription information in a register;
monitoring if a request for the address of the short message service function responsible for the terminal is received; and at least the respective one of:
retrieving the short message service subscription information from the register if the request is received, checking, based on the retrieved short message service subscription information, whether the retrieved short message service subscription information allows the terminal to receive a short message, and inhibiting providing of any address in response to the request if the short message service subscription information does not allow the terminal to receive the short message; and
retrieving the address of the short message service function from the register if the request is received, and providing the retrieved address of the short message service function in response to the request.

13. The apparatus according to claim 12, wherein the short message service reachability information comprises an information that the terminal attaches to a network.

14. The apparatus according to claim 13, wherein the network is a 5G network.

15. The apparatus according to any of claims 12 to 14, wherein the short message service reachability information comprises an information that the short message service function responsible for the terminal is newly registered.

16. The apparatus according to any of claims 12 to 15, wherein the short message service reachability information is received in a notification in response to a subscribe request.

17. The apparatus according to claim 16, wherein
the subscribe request comprises an indication to send the short message service reachability information immediately.

18. The apparatus according to claim 17, wherein the short message service reachability information is received in response to the subscribe request.

19. The apparatus according to any of claims 17 and 18, wherein the instructions, when executed by the one or more processors, further cause the apparatus to perform:
indicating in the subscribe request that the notification shall include the at least one of the address of the short message service function and the short message service subscription information in the notification.

20. The apparatus according to any of claims 17 and 18, wherein the subscribe request does not comprise any explicit indication to include the at least one of the address of the short message service function and the short message service subscription information in the notification.

21. The apparatus according to any of claims 17 to 20, wherein the subscribe request subscribes to every event modifying the reachability for short message service of the terminal, wherein the reachability for short message service of the terminal is modified if at least one of the terminal becomes reachable for short message service and the address of the short message service function responsible for the terminal is modified.

22. Method comprising:
monitoring if an short message service reachability information is received informing that a terminal becomes reachable for short message service;
obtaining at least one of an address of a short message service function responsible for the terminal and short message service subscription information of the terminal if the short message service reachability information is received;
informing a home subscriber server of the terminal on the at least one of the address of the short message service function and the short message service subscription information.

23. The method according to claim 22, further comprising:
checking if the home subscriber server has subscribed for being informed if the terminal becomes reachable for short message service;
notifying the home subscriber server that the terminal becomes reachable for short message service if the short message service reachability information is received and the home subscriber server has subscribed; and wherein
the informing of the home subscriber server comprises including the at least one of the address of the short message service function and the short message service subscription information in the notification.

24. The method according to claim 23, further comprising:
supervising whether a subscription request is received from the home subscriber server, wherein the subscription request requests to subscribe for receiving the notification immediately if the terminal becomes reachable for short message service;
checking whether the terminal is reachable for short message service when the subscription request is received from the home subscriber server; wherein
the informing of the home subscriber server comprises including the at least one of the address of the short message service function and the short message service subscription information in a response to the subscription request if the terminal is reachable for short message service when the subscription request is received from the home subscriber server.

25. The method according to claim 24, further comprising
checking if the home subscriber server has subscribed for receiving the notification immediately if the terminal becomes reachable for short message service; and wherein
the home subscriber server is immediately notified if the registration information is received and the home subscriber server has subscribed for receiving the notification immediately.

26. The method according to any of claims 23 to 25, further comprising:
checking if the request to subscribe from the home subscriber server comprises an indication to include the at least one of the address of the short message service function and the short message service subscription information in the notification;
inhibiting the including the at least one of the address of the short message service function and the short message service subscription information in the notification if the request to subscribe does not include the indication.

27. The method according to claim 26 dependent directly or indirectly on claim 24, further comprising:
inhibiting the including the at least one of the address of the short message service function and the short message service subscription information in the response to the subscription request if the request to subscribe does not include the indication.

28. The method according to any of claims 23 to 27, wherein the home subscriber server has subscribed for being informed every time if the reachability for short message service of the terminal is modified, wherein the reachability for short message service of the terminal is modified if at least one of the terminal becomes reachable in the network, and the address of the short message service function responsible for the terminal is modified.

29. The method according to any of claims 22 to 27, wherein the informing the home subscriber server on the at least one of the address of the short message service function and the short message service subscription information is performed without receiving any explicit indication requesting to provide the at least one of the address of the short message service function and the short message service subscription information.

30. The method according to any of claims 22 to 29, wherein the short message service reachability information comprises an information that the terminal becomes reachable in a network.

31. The method according to claim 30, wherein the network is a 5G network.

32. The method according to any of claims 22 to 31, wherein
the short message service reachability information comprises an information that the terminal is reachable for short message service due to a new registration of the short message service function responsible for the terminal.

33. Method comprising:
receiving a short message service reachability information informing that a terminal becomes reachable for short message service along with at least one of an address of a short message service function responsible for the terminal and short message service subscription information of the terminal;
storing the at least one of the address of the short message service function and the short message service subscription information in a register;
monitoring if a request for the address of the short message service function responsible for the terminal is received; and at least the respective one of:
retrieving the short message service subscription information from the register if the request is received, checking, based on the retrieved short message service subscription information, whether the retrieved short message service subscription information allows the terminal to receive a short message, and inhibiting providing of any address in response to the request if the short message service subscription information does not allow the terminal to receive the short message; and
retrieving the address of the short message service function from the register if the request is received, and providing the retrieved address of the short message service function in response to the request.

34. The method according to claim 33, wherein the short message service reachability information comprises an information that the terminal attaches to a network.

35. The method according to claim 34, wherein the network is a 5G network.

36. The method according to any of claims 33 to 35, wherein the short message service reachability information comprises an information that the short message service function responsible for the terminal is newly registered.

37. The method according to any of claims 33 to 36, wherein the short message service reachability information is received in a notification in response to a subscribe request.

38. The method according to claim 37, wherein
the subscribe request comprises an indication to send the short message service reachability information immediately.

39. The method according to claim 38, wherein the short message service reachability information is received in response to the subscribe request.

40. The method according to any of claims 38 and 39, further comprising:
indicating in the subscribe request that the notification shall include the at least one of the address of the short message service function and the short message service subscription information in the notification.

41. The method according to any of claims 38 and 39, wherein the subscribe request does not comprise any explicit indication to include the at least one of the address of the short message service function and the short message service subscription information in the notification.

42. The method according to any of claims 38 to 41, wherein the subscribe request subscribes to every event modifying the reachability for short message service of the terminal, wherein the reachability for short message service of the terminal is modified if at least one of the terminal becomes reachable for short message service and the address of the short message service function responsible for the terminal is modified.

43. A computer program product comprising a set of instructions which, when executed on an apparatus, is configured to cause the apparatus to carry out the method according to any of claims 22 to 42.

44. The computer program product according to claim 43, embodied as a computer-readable medium or directly loadable into a computer.
